# EUROPÄISCHE PATENTSCHRIFT

(11) **EP 1 252 425 B1**
(45) Veröffentlichungstag und Bekanntmachung des Hinweises auf die Patenterteilung: **09.07.2003**
(21) Anmeldenummer: 01905618.3
(22) Anmeldetag: 09.01.2001
(51) Int. Cl.: F02D 21/08, F02B 17/00

(54) **VERFAHREN ZUM BETREIBEN EINER BRENNKRAFTMASCHINE**
METHOD FOR OPERATING AN INTERNAL COMBUSTION ENGINE
PROCEDE PERMETTANT DE FAIRE FONCTIONNER UN MOTEUR A COMBUSTION INTERNE

(30) Priorität: 15.01.2000 DE 10001458
(43) Veröffentlichungstag der Anmeldung: 30.10.2002
(73) Patentinhaber: ROBERT BOSCH GMBH, 70442 Stuttgart (DE)
(72) Erfinder: VOLZ, Dieter, 74080 Heilbronn (DE); WILD, Ernst, 71739 Oberriexingen (DE); PFITZ, Manfred, 71665 Vaihingen (DE); MEZGER, Werner, 74246 Eberstadt (DE); PANTRING, Juergen, 71701 Schwieberdingen (DE); ODER, Michael, 75428 Illingen (DE); HESS, Werner, 70499 Stuttgart (DE); MALLEBREIN, Georg, 70825 Korntal-Muenchingen (DE); KOEHLER, Christian, 74391 Erligheim (DE); EBERLE, Kristina, 71706 Hardthof (DE); HERYNEK, Roland, 75443 Oetisheim (DE); HEINRICH, Detlef, 71638 Ludwigsburg (DE); STEGER, Mirjam, 71665 Vaihingen (DE); MENRAD, Gudrun, D-70174 Stuttgart (DE); REUSCHENBACH, Lutz, 70469 Stuttgart (DE)
(86) Internationale Anmeldenummer: DE0100046
(87) Internationale Veröffentlichungsnummer: WO01051791

(56) Entgegenhaltungen:
- EP-A- 0 882 877
- DE-A- 19 727 385
- US-A- 5 113 835

## Beschreibung

### Stand der Technik

Die Erfindung betrifft ein Verfahren zum Betreiben einer Brennkraftmaschine insbesondere eines Kraftfahrzeugs, bei dem Kraftstoff in einer ersten Betriebsart während einer Verdichtungsphase und in einer zweiten Betriebsart während einer Ansaugphase in einen Brennraum eingespritzt wird, und bei dem zwischen den Betriebsarten umgeschaltet wird, wobei die Brennkraftmaschine eine Abgasrückführung mit einem Abgasrückführventil aufweist. Die Erfindung betrifft ebenfalls eine entsprechende Brennkraftmaschine sowie ein entsprechendes Steuergerät für eine derartige Brennkraftmaschine.

Ein derartiges Verfahren, eine derartige Brennkraftmaschine und ein derartiges Steuergerät sind beispielsweise von einer sogenannten Benzin-Direkteinspritzung bekannt, siehe z.B. Dokument EP 0882 887 A. Dort wird Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für -den Leerlauf- und Teillastbetrieb geeignet ist.

Bei einer derartigen Brennkraftmaschine können Fehlfunktionen auftreten. So ist es z.B. möglich, dass das Abgasrückführventil klemmt und nicht mehr bewegt werden kann. In diesem Fall muss gewährleistet sein, dass die Brennkraftmaschine in keinen kritischen Betriebszustand gelangt.

### Aufgabe und Vorteile der Erfindung

Aufgabe der Erfindung ist es, ein Verfahren zum Betreiben einer Brennkraftmaschine zu schaffen, mit dem gewährleistet wird, dass Fehlfunktionen der Abgasrückführung zu keinen kritischen Betriebszuständen der Brennkraftmaschine führen.

Diese Aufgabe wird bei einem Verfahren der eingangs genannten Art erfindungsgemäß dadurch gelöst, dass die Brennkraftmaschine bei in offenem Zustand klemmendem Abgasrückführventil in die erste Betriebsart umgeschaltet wird. Bei einer Brennkraftmaschine und einem Steuergerät der eingangs genannten Art wird die Aufgabe erfindungsgemäß entsprechend gelöst.

Klemmt das Abgasrückführventil im offenen Zustand, so wird die Brennkraftmaschine erfindungsgemäß in den Schichtbetrieb umgeschaltet. Im Schichtbetrieb kann das offene Abgasrückführventil bei der Steuerung und/oder Regelung der Brennkraftmaschine ohne weiteres berücksichtigt werden. Ein kritischer Zustand kann sich damit nicht einstellen. Durch die Wahl des Schichtbetriebs als Notlaufbetrieb wird somit ein sicherer Betrieb der Brennkraftmaschine gewährleistet. Der Nachteil, dass im Schichtbetrieb nur ein vermindertes Drehmoment von der Brennkraftmaschine erzeugt werden kann, wird dabei von dem Vorteil eines sicheren Betriebs bei weitem aufgewogen.

Bei einer vorteilhaften Weiterbildung der Erfindung wird die Brennkraftmaschine bei in geschlossenem Zustand klemmendem Abgasrückführventil in die zweite Betriebssart umgeschaltet.

Klemmt das Abgasrückführventil im geschlossenen Zustand, so wird die Brennkraftmaschine erfindungsgemäß in den Homogenbetrieb umgeschaltet. Im Homogenbetrieb kann die Brennkraftmaschine bei geschlossenem Abgasrückführventil ohne weiteres und insbesondere ohne eine Überschreitung von Abgasgrenzwerten betrieben werden. Damit ist auch in diesem Fehlerfall ein sicherer Betrieb der Brennkraftmaschine gegeben.

Bei einer weiteren vorteilhaften Weiterbildung der Erfindung wird bei einer sonstigen Fehlfunktion der Abgasrückführung das Abgasrückführventil geschlossen und es wird die Brennkraftmaschine in die zweite Betriebsart umgeschaltet. Besonders vorteilhaft ist es, wenn ein Klemmen des Abgasrückführventils mit Hilfe eines Sensors festgestellt wird.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

Die einzige Figur der Zeichnung zeigt ein schematisches Blockschaltbild eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden eine sogenannte Abgasrückführung.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist. Die Tankentlüftungsleitung 16 und das Tankentlüftungsventil 17 bilden eine sogenannte Tankentlüftung.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des Weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Stellern das Verhalten der Brennkraftmaschine 1 beeinflusst werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch.und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

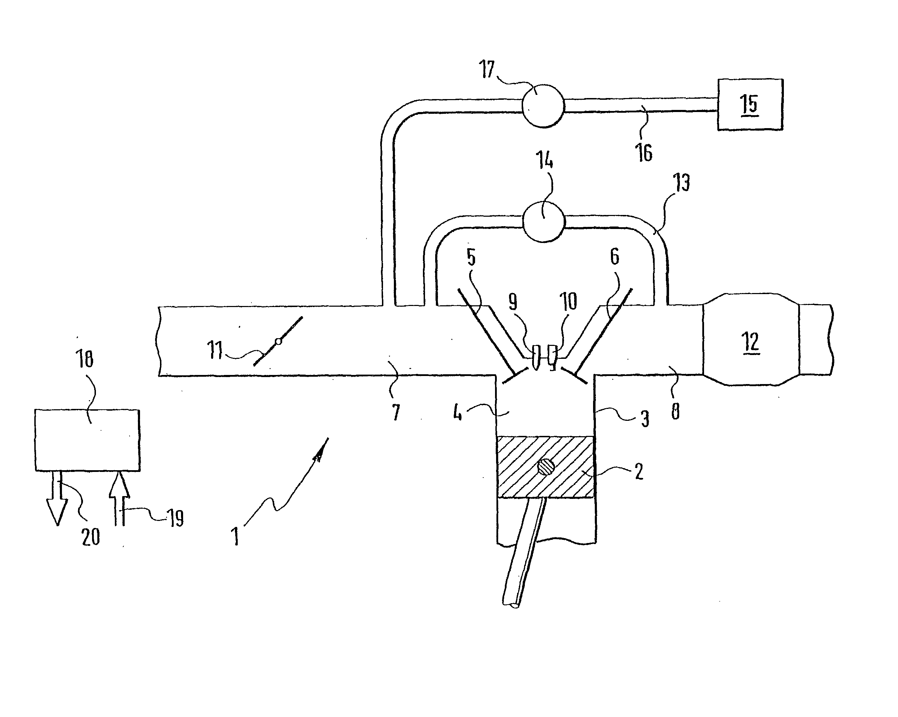

Die Brennkraftmaschine 1 der Figur 1 kann in einer Mehrzahl von Betriebsarten betrieben werden. So ist es möglich, die Brennkraftmaschine 1 in einem Homogenbetrieb, einem Schichtbetrieb, einem homogenen Magerbetrieb und dergleichen zu betreiben.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so dass im Brennraum 4 ein im Wesentlichen homogenes Kraftstoff/Luft-Gemisch entsteht. Das zu erzeugende Moment wird dabei im Wesentlichen über die Stellung der Drosselklappe 11 von dem Steuergerät 18 eingestellt. Im Homogenbetrieb werden die Betriebsgrößen der Brennkraftmaschine 1 derart gesteuert und/oder geregelt, dass Lambda gleich Eins ist. Der Homogenbetrieb wird insbesondere bei Vollast angewendet.

Der homogene Magerbetrieb entspricht weitgehend dem Homogenbetrieb, es wird jedoch das Lambda auf einen Wert kleiner Eins eingestellt.

Im Schichtbetrieb wird der Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung und/oder der Tankentlüftung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Zwischen den genannten Betriebsarten der Brennkraftmaschine 1 kann hin- und her- bzw. umgeschaltet werden. Derartige Umschaltungen werden von dem Steuergerät 18 durchgeführt.

Im Betrieb der Brennkraftmaschine 1 können Fehler in der Abgasrückführung auftreten, die unterschiedliche Fehlerreaktionen auslösen. Hier werden zumindest drei Fälle unterschieden.
1) Das Abgasrückführventil 14 klemmt im offenen Zustand und kann damit nicht mehr geschlossen werden. Wird ein im offenen Zustand klemmendes Abgasrückführventil 14 z.B. durch einen Stellungssensor oder sonstige Maßnahmen festgestellt, so wird die Brennkraftmaschine 1 in den Schichtbetrieb umgeschaltet. Im Schichtbetrieb kann die Brennkraftmaschine 1 bei eingeschränkter Motorleistung auch mit offenem Abgasrückführventil 14 betrieben werden, so dass insoweit ein Notlaufbetrieb möglich ist. Die Abgasgrenzwerte können dabei eingehalten werden.
2) Das Abgasrückführventil 14 klemmt im geschlossenen Zustand und kann nicht mehr geöffnet werden. Wird ein im geschlossenen Zustand klemmendes Abgasrückführventil 14 festgestellt, so wird die Brennkraftmaschine 1 in den Homogenbetrieb umgeschaltet. Im Homogenbetrieb kann die Brennkraftmaschine 1 ohne weiteres mit geschlossenem Abgasrückführventil 14 betrieben werden, ohne dass Abgasgrenzwerte überschritten werden. Grundsätzlich wäre auch der Schichtbetrieb möglich, jedoch können hier gegebenenfalls vorgeschriebene Abgasgrenzwerte nicht mehr eingehalten werden.
3) Es wird ein sonstiger Fehler in der Abgasrückführung oder in der Steuerung und/oder Regelung der Abgasrückführung festgestellt und das Abgasrückführventil 14 kann geschlossen werden. In diesem Fall wird die Brennkraftmaschine 1 in den Homogenbetrieb umgeschaltet und das Abgasrückführventil (14) wird geschlossen. Wie bereits erläutert wurde, kann die Brennkraftmaschine 1 im Homogenbetrieb ohne weiteres auch mit geschlossenem Abgasrückführventil 14 betrieben werden, ohne dass Abgasgrenzwerte verletzt werden.

Die Feststellung eines Fehler in der Abgasrückführung oder an dem Abgasrückführventil 14 kann von dem Steuergerät 18 direkt oder indirekt mit Hilfe von Sensoren erfolgen und/oder durch die Diagnose des das Abgasrückführventil 14 ansteuernden Aktors oder durch sonstige verfahrenstechnische Maßnahmen. In Abhängigkeit von dem erkannten Fehler wird dann von dem Steuergerät 18 entsprechend der vorstehenden Fälle der zugehörige Notlaufbetrieb ausgewählt und eingestellt. Dann erfolgt ein Eintrag in einem Fehlerspeicher des Steuergeräts 18.

## Patentansprüche

1. Verfahren zum Betreiben einer Brennkraftmaschine (1) insbesondere eines Kraftfahrzeugs, bei dem Kraftstoff in einer ersten Betriebsart während einer Verdichtungsphase und in einer zweiten Betriebsart während einer Ansaugphase in einen Brennraum (4) eingespritzt wird, und bei dem zwischen den Betriebsarten umgeschaltet wird, wobei die Brennkraftmaschine (1) eine Abgasrückführung mit einem Abgasrückführventil (14) aufweist, **dadurch gekennzeichnet, dass** die Brennkraftmaschine (1) bei in offenem Zustand klemmendem Abgasrückführventil (14) in die erste Betriebsart umgeschaltet wird.

2. Verfahren nach Anspruch 1, **dadurch gekennzeichnet, dass** die Brennkraftmaschine (1) bei in geschlossenem Zustand klemmendem Abgasrückführventil (14) in die zweite Betriebssart umgeschaltet wird.

3. Verfahren nach einem der Ansprüche 1 oder 2, **dadurch gekennzeichnet, dass** bei einer sonstigen Fehlfunktion der Abgasrückführung das Abgasrückführventil (14) geschlossen wird und die Brennkraftmaschine (1) in die zweite Betriebsart umgeschaltet wird.

4. Verfahren nach einem der Ansprüche 1 bis 3, **dadurch gekennzeichnet, dass** ein Klemmen des Abgasrückführventils (14) mit Hilfe eines Sensors festgestellt wird.

5. Steuerelelement, insbesondere Read-Only-Memory oder Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 4 geeignet ist.

6. Brennkraftmaschine (1) insbesondere eines Kraftfahrzeugs, mit einem Brennraum (4), in den Kraftstoff in einer ersten Betriebsart während einer Verdichtungsphase und in einer zweiten Betriebsart während einer Ansaugphase einspritzbar ist, mit einem Steuergerät (18) zur Umschaltung zwischen den Betriebsarten, und mit einer Abgasrückführung mit einem Abgasrückführventil (14), **dadurch gekennzeichnet, dass** die Brennkraftmaschine (1) durch das Steuergerät (18) bei in offenem Zustand klemmendem Abgasrückführventil (14) in die erste Betriebsart umschaltbar ist.

7. Steuergerät (18) für eine Brennkraftmaschine (1) insbesondere eines Kraftfahrzeugs, wobei die Brennkraftmaschine (1) mit einem Brennraum (4) versehen ist, in den Kraftstoff in einer ersten Betriebsart während einer Verdichtungsphase und in einer zweiten Betriebsart während einer Ansaugphase einspritzbar ist, wobei das Steuergerät (18) zur Umschaltung zwischen den Betriebsarten vorgesehen ist, und wobei die Brennkraftmaschine (1) mit einer Abgasrückführung mit einem Abgasrückführventil (14) versehen ist, **dadurch gekennzeichnet, dass** die Brennkraftmaschine (1) durch das Steuergerät (18) bei in offenem Zustand klemmendem Abgasrückführventil (14) in die erste Betriebsart umschaltbar ist.

## Claims

1. Method for operating an internal combustion engine (1), in particular of a motor vehicle, in which fuel is injected into a combustion chamber (4) during a compression phase in a first operating mode and during an induction phase in a second operating mode, and in which the engine is switched between the two operating modes, the internal combustion engine (1) having exhaust-gas recirculation with an exhaust-gas recirculation valve (14), **characterized in that** the internal combustion engine (1) is switched into the first operating mode when the exhaust-gas recirculation valve (14) is stuck in the open position.

2. Method according to Claim 1, **characterized in that** the internal combustion engine (1) is switched to the second operating mode when the exhaust-gas recirculation valve (14) is stuck in the closed position.

3. Method according to one of Claims 1 or 2, **characterized in that** in the event of some other malfunction in the exhaust-gas recirculation, the exhaust-gas recirculation valve (14) is closed and the internal combustion engine (1) is switched to the second operating mode.

4. Method according to one of Claims 1 to 3, **characterized in that** a sensor is used to detect that the exhaust-gas recirculation valve (14) has become stuck.

5. Control element, in particular read only memory or flash memory, for a control unit (18) of an internal combustion engine (1), in particular of a motor vehicle, which stores a program which can run on a computer unit, in particular on a microprocessor, and is suitable for implementing a method according to one of Claims 1 to 4.

6. Internal combustion engine (1), in particular of a motor vehicle, having a combustion chamber (4), into which fuel can be injected during a compression phase in a first operating mode and during an induction phase in a second operating mode, having a control unit (18) for switching between the operating modes, and having an exhaust-gas recirculation with an exhaust-gas recirculation valve (14), **characterized in that** the internal combustion engine (1) can be switched to the first operating mode by the control unit (18) when the exhaust-gas recirculation valve (14) is stuck in the open position.

7. Control unit (18) for an internal combustion engine (1), in particular of a motor vehicle, the internal combustion engine (1) being provided with a combustion chamber (4) into which fuel can be injected during a compression phase in a first operating mode and during an induction phase in a second operating mode, the control unit (18) being provided for the purpose of switching between the operating modes, and the internal combustion engine (1) being provided with an exhaust-gas recirculation with an exhaust-gas recirculation valve (14), **characterized in that** the internal combustion engine (1) can be switched to the first operating mode when the exhaust-gas recirculation valve (14) is stuck in the open position.

## Revendications

1. Procédé de mise en oeuvre d'un moteur à combustion interne (I) notamment d'un véhicule automobile selon lequel on injecte le carburant dans la chambre de combustion (4) pendant la phase de compression pour un premier mode de fonctionnement et pendant la phase d'admission pour un second mode de fonctionnement et selon lequel on commute entre les différents modes de fonctionnement, le moteur à combustion interne (1) comportant une réintroduction des gaz d'échappement équipée d'une soupape de réintroduction des gaz d'échappement (14).
**caractérisé en ce que**
le moteur à combustion interne (1) commute dans le premier mode de fonctionnement si la soupape de réintroduction des gaz d'échappement (14) est grippée en position ouverte.

2. Procédé selon la revendication 1,
**caractérisé en ce qu'**
on commute le moteur à combustion interne (1) dans le second mode de fonctionnement si la soupape de réinjection des gaz d'échappement (14) est grippée dans l'état de fonctionnement fermé.

3. Procédé selon l'une des revendications 1 ou 2,
**caractérisé en ce que**
pour tout autre fonctionnement défectueux de la réintroduction des gaz d'échappement, on ferme la soupape de réintroduction des gaz d'échappement (14) et on commute le moteur à combustion interne (1) dans son second mode de fonctionnement.

4. Procédé selon l'une des revendications 1 à 3,
**caractérisé en ce qu'**
on détecte le blocage de la soupape de réintroduction des gaz d'échappement (14) par un capteur.

5. Elément de commande notamment mémoire morte ou mémoire flash pour un appareil de commande (18) d'un moteur à combustion interne (1) notamment d'un véhicule contenant en mémoire un programme qui peut étre exécuté sur un appareil de calcul notamment un microprocesseur en fonction du déroulement et servir à l'exploitation d'un procédé selon l'une des revendications 1 à 4.

6. Moteur à combustion Interne (1) notamment de véhicule automobile comportant une chambre de combustion (4) dans laquelle on injecte le carburant au cours d'un premier mode de fonctionnement, pendant la phase de compression et selon un second mode de fonctionnement pendant la phase d'admission, comprenant un appareil de commande (18) pour commuter entre les modes de fonctionnement ainsi qu'une réintroduction des gaz d'échappement avec une soupape de réintroduction des gaz d'échappement (14),
**caractérisé en ce que**
le moteur à combustion interne (1) est commuté par l'appareil de commande (18) dans le premier mode de fonctionnement si la soupape de réintroduction des gaz d'échappement (14) est bloquée en position ouverte.

7. Appareil de commande (18) pour un moteur à combustion interne (1) notamment d'un véhicule selon lequel le moteur à combustion interne (1) comporte une chambre de combustion (4) dans laquelle on injecte le carburant dans un premier mode de fonctionnement pendant la phase de compression et dans un second mode de fonctionnement, pendant la phase d'admission, l'appareil de commande (18) étant prévu pour commuter entre les modes de fonctionnement et le moteur à combustion interne (1) comportant une réintroduction des gaz d'échappement avec une soupape de réinjection de gaz d'échappement (14),
**caractérisé en ce que**
le moteur à combustion interne (1) peut être commuté par l'appareil de commande (18) dans le premier mode de fonctionnement si la soupape de réintroduction des gaz d'échappement (14) est bloquée en position ouverte.
